# EUROPEAN PATENT SPECIFICATION

(11) **EP 0 283 254 B1**
(45) Date of publication and mention of the grant of the patent: **04.08.1993**
(21) Application number: 88302272.5
(22) Date of filing: 16.03.1988
(51) Int. Cl.: H02M 3/337

(54) **Push-pull drive circuit for a power converter**
Push-pull-Treiberschlatung für Leistungskonverter
Circuit de commande de push-pull pour convertisseur de puissance

(30) Priority: 17.03.1987 GB 8706275
(43) Date of publication of application: 21.09.1988
(73) Proprietor: RCA Thomson Licensing Corporation, Princeton, NJ 08540 (US)
(72) Inventor: Haferl, Peter Eduard, CH-8134 Adliswil (CH)
(74) Representative: Pratt, Richard Wilson

(56) References cited:
- FR-A- 2 290 078
- JP-A-56 103 971
- US-A- 3 671 804
- US-A- 4 316 243

## Description

The invention relates to power supply system and, preferably, to a drive circuitry of a push-pull stage in a DC-to-DC converter power supply of, for example, a television apparatus.

In some television power supply applications, such as in a battery operated television system, it may be desirable to convert an input source of direct voltage, such as a battery, to a supply of direct output voltage that is at, for example, a higher voltage level. This is conventionally achieved using a circuit known as a DC-to-DC converter. In such a converter the available input DC voltage is chopped to generate an AC voltage which can, in turn, be stepped up or down to a desired voltage level using a transformer. The AC voltage is rectified and filtered to obtain a DC output voltage that is coupled to energize various stages in the television system.

Chopping of the input DC voltage may be done in a push-pull manner by transistor switches that are coupled to a corresponding pair of terminals of a primary winding of the transformer. The input DC voltage is coupled to a terminal located intermediate the pair of terminals. The transistor switches are alternately turned on and off by control signals at corresponding control electrodes of the transistor switches to form the corresponding alternately changing polarities of the AC voltage. The AC voltage is then transformer coupled and rectified to form the output voltage.

It has been recognized that it is desirable to prevent the transistor switches from being simultaneously conductive, since simultaneous conduction produces very high currents. It has been also recognized that the conduction time of each transistor switch may be a function of various circuit parameters which may vary. It is known to inhibit simultaneous conduction in a manner that automatically takes into account the pertinent parameters that affect switching delays. Such parameters may be different for different transistor switches and may be affected by environmental conditions such as temperature.

JP-A-56-103971 discloses a circuit comprising two bipolar transistors operated in push-pull manner. In order to prevent simultaneous conduction of the two transistors, each transistor has a detector which detects the base-emitter voltage thereof. The detected base-emitter voltage of one transistor is sent, via a delay circuit to an AND gate. The AND gate allows a drive signal to be applied to the other transistor only when the detected and delayed base-emitter voltage indicates the one transistor is non-conductive. The delay needs to be chosen for worst-case conditions resulting in excessive dead times.

It may be desirable to control the conduction time of the transistor switches using control signals that are nonoverlapping in a manner that, advantageously, reduces the dead time that occurs when neither of the transistor switches conducts. Reducing the dead time, advantageously, increases the power efficiency. Reducing the dead time also, advantageously, reduces the amplitude of, for example, the second harmonic relative to the fundamental frequency of the AC voltage. Reduced harmonics reduces the need for filtering out of AC components from the DC output voltage. It may be desirable to dynamically reduce the dead time in a manner that takes into account the values of the pertinent parameters of, for example, the transistor switches,which parameters may vary and affect the switching conduction and delay times.

According to the present invention, there is provided a power supply apparatus having an output stage that operates in a push-pull manner, comprising: a load having first and second terminals; a source of an input supply voltage coupled (through T₁) to said load; a first transistor of said output stage having corresponding first and second main current conducting electrodes that form a main current path, said first main current conducting electrode of said first transistor being coupled (through T₁) to said first terminal of said load; a second transistor of said output stage having corresponding first and second main current conducting electrodes, said first main current conducting electrode of said second transistor being coupled (through T₁) to said second terminal of said load; a source of first and second switching signals coupled to corresponding control electrodes of said first and second transistors such that said first signal determines in a given period thereof a first instant when said first transistor begins changing from being conductive to being nonconductive and said second signal determines in said given period when said second transistor becomes conductive so as to cause said push-pull manner operation by said first and second transistors; characterized by means responsive to a third signal that is developed at the control electrode of the conductive one of said first and second transistors and that is indicative of a magnitude of a current that flows between said main current conducting electrodes of said conductive transistor for generating a fourth signal that is coupled to the control electrode of the non-conductive one of said first and second transistors to prevent said non-conductive transistor from conducting in said given period while the magnitude of said current that flows in said conductive transistor is greater than a first predetermined level, thereby avoiding simultaneous conduction of said first and second transistors, wherein said third signal at said control electrode of said conductive transistor is applied to said fourth signal generating means via a signal path that does not include the main current path of said conductive transistor.

The third signal may be developed as a result of capacitive coupling of a signal from the main current conducting electrode of, for example, the first transistor, that may be of the MOSFET type, to the control electrode of the first transistor via, for example, an inter-electrode capacitance. The inter-electrode capacitance coupling occurs mainly during a transition time from conduction to nonconduction in the first transistor because of input capacitance multiplication phenomenon, known as the Miller effect or Miller capacitance.

In the Drawing:
FIGURE 1 illustrates a drive circuit, embodying aspects of the invention, of a push-pull stage in a DC-to-DC converter power supply; and
FIGURES 2a-2c illustrate waveforms useful in explaining the operation of the circuit of FIGURE 1.

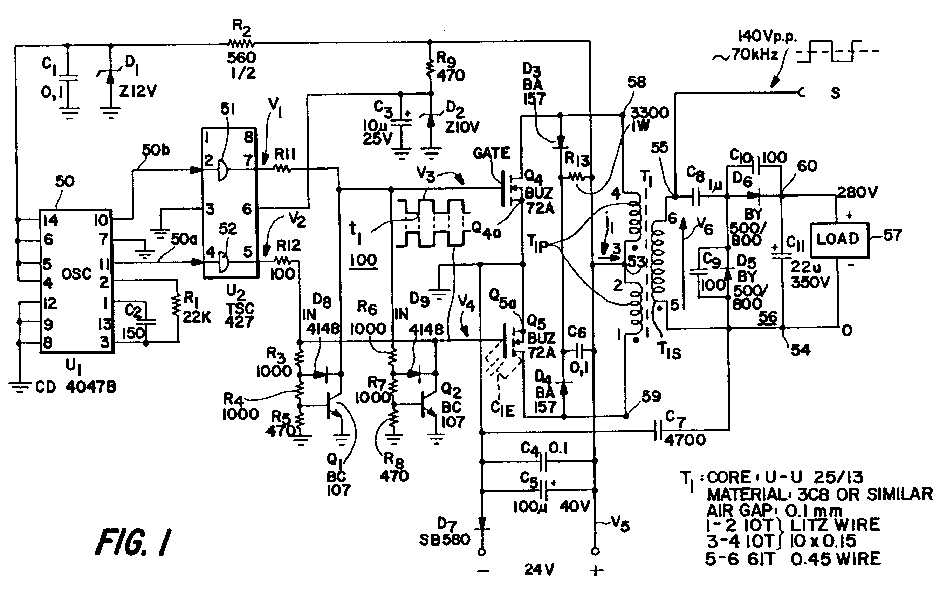

FIGURE 1 illustrates a battery operated television apparatus power supply. The power supply includes an oscillator 50 that generates signals 50a and 50b of substantially opposite phases, at, for example, approximately 70 kHz that are coupled via corresponding driver stages 51 and 52 to form corresponding signals V₁ and V₂. Signals V₁ and V₂ each have a square waveform of 50% duty cycle, and are of opposite phases. All the transitions in signals V₁ and V₂ occur substantially simultaneously. Signals V₁ and V₂ are coupled via corresponding current limiting and sampling resistors R₁₁ and R₁₂ to corresponding gate electrodes of MOSFET power transistors Q₄ and Q₅. Consequently, signals V₃ and V₄ that are at substantially opposite phases are formed at the gates of transistors Q₄ and Q₅, respectively. The waveforms of signals V₃ and V₄, are waveshaped, embodying an aspect of the invention, in a manner that is described in detail later on.

A pair of corresponding main current conducting electrodes Q₄ₐ and Q₅ₐ of transistors Q₄ and Q₅, respectively, are each coupled to ground. A second pair of corresponding main current conducting electrodes of transistors Q₄ and Q₅ are coupled to corresponding end terminals 58 and 59 of a primary winding T_{1P} of a step-up transformer T₁. A terminal 53 of primary winding T_{1P} of transformer T₁, coupled intermediate terminals 58 and 59, is coupled to a battery generated DC voltage V₅ that is referenced to ground. As a result of the push-pull operation of transistors Q₄ and Q₅, an AC voltage V₆ is developed across a secondary winding T_{1S} of transformer T₁. AC voltage V₆ is coupled via a conventional voltage doubler 56 to a load 57 for generating a DC output voltage that is, for example, substantially higher than battery voltage V₅ and that is developed between a terminal 60 of load 57 and a terminal 54. Load 57 may represent the equivalent load formed by a television circuitry, not shown in the FIGURES, that is energized by the power supply of FIGURE 1.

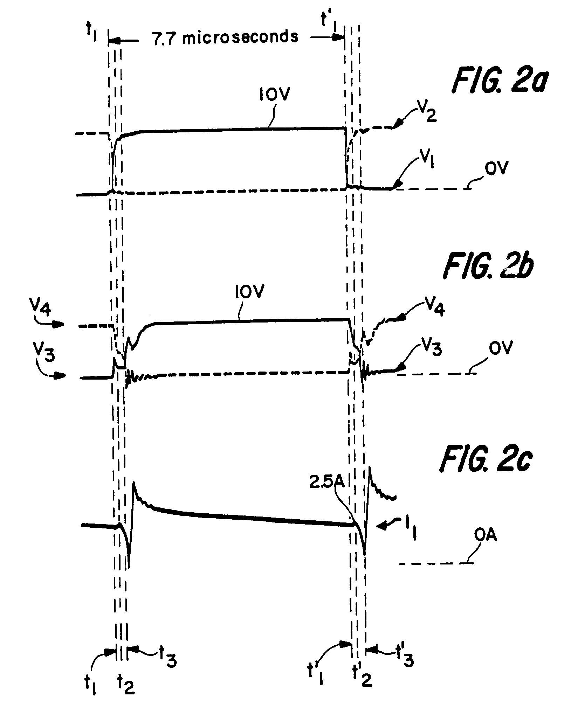

FIGURES 2a-2c illustrate waveforms useful for explaining the operation of the circuit of FIGURE 1. Similar numbers and symbols in FIGURES 1 and 2a-2c indicate similar items of functions.

A waveshaping arrangement 100 of FIGURE 1, embodying an aspect of the invention, receives signals V₁ and V₂ and generate signals V₃ and V₄, that are coupled to the gate electrodes of transistors Q₄ and Q₅, respectively. Arrangement 100, advantageously, automatically prevents simultaneous conduction of transistors Q₄ and Q₅.

Prior to time t₁ of FIGURE 2a, transistor Q₄ of FIGURE 1 is maintained nonconductive by signal V₁ that is zero and transistor Q₅ is maintained conductive by signal V₂ that is 10 volts. At time t₁ of FIGURE 2a, signal V₁ changes rapidly from substantially zero volts to 10 volts. Simultaneously, signal V₂ changes from 10 volts to zero volts. As a result of signal V₂ changing to zero volts, signal V₄ of FIGURE 2b begins changing in a fast transition from a value of that is approximately 10 volts toward a lower value. At time t₂, when signal V₄ has reached a level of approximately 5 volts, transistor Q₅ of FIGURE 1 begins operating in its active region that causes the impedance between its main current conducting electrodes to increase and the voltage at terminal 59 to become a positive high voltage. This increase in the voltage at terminal 59 is capacitively coupled back to the control, or gate electrode of transistor Q₅ through an interelectrode capacitance C_{IE} that is shown in FIGURE 1 by a dashed line. The result is an equivalent large input capacitance at the gate of transistor Q₅. The large input capacitance is referred to as the Miller capacitance.

Each of transistors Q₄ and Q₅ of FIGURE 1 employs, illustratively, a MOSFET transistor of the type BUZ 72A that has a gate input capacitance of 440 pF at V_{GS}=OV and at V_{DS} = 25V. During the transition time from conduction to nonconduction of transistor Q₅, for example, the input capacitance is increased to 25,000 pF, as a result of the Miller effect. The Miller capacitance that is large causes signal V₄ of FIGURE 2b to remain at approximately 5 volts for a relatively long duration that is from time t₂ and until time t₃. Consequently, transistor Q₅ of FIGURE 1 remains conductive during the interval t₁-t₃.

Embodying an aspect of the invention, signal V₄ is coupled via a voltage divider that includes a series arrangement of resistors R₃, R₄ and R₅ to develop a voltage across resistor R₅ that is coupled between the base and emitter electrodes of a transistor Q₁. The collector electrode of transistor Q₁ is coupled to the gate electrode of transistor Q₄ and to a corresponding terminal of resistor R₁₁. Thus, resistor R₁₁ and transistor Q₁, operating as a controllable impedance, function as a voltage attenuator that attenuates the level of signal V₃ as long as transistor Q₅ and, hence, as long as transistor Q₁, remain conductive. As long as signal V₄ is above a predetermined level that is indicative of transistor Q₅ being conductive, the voltage attenuator that includes resistor R₁₁ and transistor Q₁ automatically holds down the level of signal V₃ to prevent signal V₃ from exceeding the threshold level of transistor Q₄. Thus, advantageously, the attenuator inhibits conduction in transistor Q₄ until the input capacitance of transistor Q₅ is discharged and transistor Q₅ ceases conduction.

Embodying another aspect of the invention, the control terminal, or the base electrode, of transistor Q₁ is coupled to the gate of transistor Q₅ in a control signal path that does not include the drain electrode main current path of transistor Q₅. Thus, sensing of the current that flows in transistor Q₅ is performed, advantageously, without the need for a current sensing resistor in the current path that includes the source and drain electrodes of transistor Q₅. Therefore, the current sensing arrangement, advantageously, does not affect any of the peak current in, for example, transistor Q₅ and the impedance that is coupled in series with primary winding T₁ₚ.

A diode D₈ having an anode that is coupled at a junction between resistors R₃ and R₄ and having a cathode that is coupled to the collector of transistor Q₁ forms a negative feedback arrangement that, advantageously, keeps transistor Q₁ out of being in saturation. The feedback arrangement that includes diode D₈ limits the level of signal V₃ of FIGURE 2b, prior to time t₃, to, approximately, 2 volts, which is sufficiently low to prevent conduction of transistor Q₄. After time t₃ of FIGURE 2b, signal V₄ ramps down to a level that is below 4 volts that causes the current between the main current conducting electrodes of transistor Q₅ of FIGURE 1 to decrease rapidly to zero, resulting in transistor Q₅ becoming nonconductive. After time t₃, when the level of signal V₄ of FIGURE 2b ramps downward, transistor Q₁ of FIGURE 1 is, advantageously, quickly turned off because it is not in saturation. The fast turn-off of transistor Q₁ enables transistor Q₄ to quickly turn on to its saturation state after time t₃ of FIGURE 2b. Thus, the saturation state of transistor Q₄ occurs only after transistor Q₅ becomes nonconductive.

During the interval tʹ₁-tʹ₃ of FIGURES 2a-2c, when transistor Q₄ of FIGURE 1 switches from conduction to nonconduction, transistor Q₂ controls the waveform shape of signal V₄ in a similar manner, as described above, so as to inhibit overlapping conduction of transistors Q₄ and Q₅, as illustrated in FIGURE 2b during the interval t₁ʹ-t₃ʹ. Thus, simultaneous conduction of transistors Q₄ and Q₅ is advantageously, prevented. Furthermore, because waveshaping arrangement 100 responses automatically to the levels of signals V₄ and V₃, variation of circuit parameters such as, for example, the Miller capacitance, advantageously, will not defeat the operation of arrangement 100 that dynamically waveshapes signals V₃ and V₄.

As explained before, arrangement 100 prevents any significant simultaneous conduction in transistors Q₄ and Q₅ while, advantageously, maximizing the duration of conduction of transistors Q₄ and Q₅. By maximizing the duration of conduction time, the peak current that flows in each of transistors Q₄ and Q₅, that corresponds with a given level of a load current at secondary winding T_{1S}, may be, advantageously, reduced relative to that required when less than maximum conduction time occurs. Therefore, less stringent peak current requirements are imposed on transistors Q₄ and Q₅.

FIGURE 2c illustrates the waveform of a current i₁ that flows into terminal 53 of primary winding T_{1P} of transformer T₁ of FIGURE 1. Current i₁ of FIGURE 2c flows, prior to time t₃, through the lower portion of primary winding T_{1P} of transformer T₁ of FIGURE 1 between terminals 53 and 58 and through transistor Q₅. During the interval t₃-t₃ʹ of FIGURE 2c, current i₁ of FIGURE 1 flows through the upper portion of primary winding T_{1P} between terminals 53 and 59. Note that during switching intervals t₁-t₃ and t₁ʹ-t₃ʹ of FIGURE 2c, current i₁ is interrupted, as shown by the negative going notches, for only a short time. Therefore, advantageously, both current i₁ and the resistive losses are small. The positive peaks of current i₁ of FIGURE 2c, appearing just after times t₃ and t₃ʹ, respectively, are caused by the operation of voltage doubler 56 that charges capacitors C₈ and C₁₁.

It should be understood that, advantageously, the operation frequency may be increased without causing a significant change in the peak of current i₁. This is so because, in each cycle, the dead times that occurs at, for example, times t₃ and t₃ʹ of FIGURE 2c, when neither transistor Q₄ nor Q₅ of FIGURE 1 is conductive, are, each, substantially small relative to the conduction intervals.

Arrangement 100 of FIGURE 1 employs general purpose NPN transistors with an fₜ of 200 MHz. It should be understood that, for example, fast small signal MOSFET transistors may be employed in place of transistors Q₁ and Q₂.

## Claims

1. A power supply apparatus having an output stage that operates in a push-pull manner, comprising:
a load (57) having first (60) and second (54) terminals;
a source of an input supply voltage (24V) coupled (through T₁) to said load (57);
a first transistor (Q₄) of said output stage having corresponding first and second main current conducting electrodes that form a main current path, said first main current conducting electrode of said first transistor being coupled (through T₁) to said first terminal (60) of said load (57);
a second transistor (Q₅) of said output stage having corresponding first and second main current conducting electrodes, said first main current conducting electrode of said second transistor being coupled (through T₁) to said second terminal (54) of said load (57);
a source (50) of first (V₁) and second (V₂) switching signals coupled to corresponding control electrodes of said first (Q₄) and second (Q₅) transistors such that said first signal (V₁) determines in a given period thereof a first instant when said first transistor (Q₄) begins changing from being conductive to being nonconductive and said second signal (V₂) determines in said given period when said second transistor (Q₅) becomes conductive so as to cause said push-pull manner operation by said first (Q₄) and second (Q₅) transistors;
characterized by
means (Q₁,Q₂) responsive to a third signal that is developed at the control electrode of the conductive one of said first and second transistors (Q₄,Q₅) and that is indicative of a magnitude of a current that flows between said main current conducting electrodes of said conductive transistor for generating a fourth signal that is coupled to the control electrode of the non-conductive one of said first and second transistors (Q₄,Q₅) to prevent said non-conductive transistor from conducting in said given period while the magnitude of said current that flows in said conductive transistor is greater than a first predetermined level, thereby avoiding simultaneous conduction of said first (Q₄) and second (Q₅) transistors, wherein said third signal at said control electrode of said conductive transistor is applied to said fourth signal generating means via a signal path that does not include the main current path of said conductive transistor.

2. An apparatus according to Claim 1 characterized in that said first (V₁) and second (V₂) switching signals are substantially anti-phased signals such that all the transition times in both occur simultaneously.

3. An apparatus according to Claim 1 characterized in that said first transistor (Q₄) comprises a MOSFET power transistor.

4. An apparatus according to Claim 1 characterized in that, during an interval that occurs when said first transistor (Q₄) changes from being conductive to being nonconductive, a Miller capacitance couples one of said first and second main current conducting electrodes to said control electrode of said first transistor (Q₄) that causes a delay in a transition of said third signal (V₃) at said control electrode thereof.

5. An apparatus according to Claim 1 characterized in that said load (57) is coupled through a transformer (T₁) and wherein an output supply voltage (V₆) is developed at a secondary winding (T_{1S}) of said transformer (T₁).

6. An apparatus according to Claim 1 characterized in that said fourth signal generating means comprises, a first controllable attenuator (Q₂,R12) responsive to said third signal (V₃) and coupled between a terminal (5) that develops said second switching signal (V₂) and said control electrode of said second transistor (Q₅) for coupling said fourth signal (V₄) that is representative of a portion of said second switching signal (V₂) to said control electrode of said second transistor (Q₅) such that as long as a difference signal developed between said control and said second main current conducting electrodes of said first transistor (Q₄) is larger than a predetermined value that is indicative of a current level in said first transistor (Q₄) being greater than said predetermined level, said first controllable attenuator (Q₂,R12) attenuates said signal portion that is developed at said control electrode of said second transistor (Q₅) for delaying conduction in said second transistor.

7. An apparatus according to Claim 6, characterized in that said first controllable attenuator comprises a voltage divider (R₆,R₇,R₈) coupled to said control electrode of said first transistor (Q₄), and a third transistor (Q₂) having a main current conducting electrode that is coupled to said control electrode of said second transistor (Q₅) and having a control electrode that is coupled to an output terminal of said voltage divider, said third transistor (Q₂) forming a controllable shunting impedance at said control electrode of said second transistor (Q₅) that varies in accordance with a signal that is developed at said output terminal of said voltage divider and that is proportional to said third signal (V₃) developed at said control electrode of said first transistor (Q₄) so as to attenuate said signal that is developed at said control electrode of said second transistor (Q₅) as long as said first transistor is conductive, and when said first transistor becomes nonconductive, said controllable shunting impedance (Q₂,R11) changes in a manner that causes said second transistor (Q₅) to become conductive.

8. An apparatus according to Claim 7 characterized in that said impedance that is formed by said third transistor (Q₂) assumes a substantially lower value as long as said third signal (V₃) at said control electrode of said first transistor (Q₄) is greater than a predetermined value.

9. An apparatus according to Claim 7 characterized in that said voltage divider comprises a resistive network (R₆,R₇,R₈) and wherein said first controllable attenuator further comprises feedback means (D₉) coupled between said third transistor (Q₂) and a second output terminal of said resistive network (R₆,R₇,R₈) for generating a signal that prevents said third transistor (Q₂) from being in saturation, so as to render said second transistor (Q₅) conductive immediately after said first transistor (Q₄) becomes nonconductive.

10. An apparatus according to Claim 6 characterized in that said first controllable attenuator comprises a resistor (R12) coupled between a terminal (5) where said second switching signal (V₂) is developed and said control electrode of said second transistor (Q₅), and a third transistor (Q₂) having a main current conducting electrode that is coupled at a junction between said resistor (R12) and said control electrode of said second transistor (Q₅) such that said resistor (R12) and said third transistor (Q₂) attenuate a portion of said second switching signal (V₂) that is coupled to said control electrode of said second transistor (Q₅) as long as said first transistor (Q₄) is conductive, and when said first transistor (Q₄) becomes nonconductive a greater portion of said second switching signal (V₂) is coupled to said control electrode of said second transistor (Q₅).

11. An apparatus according to Claim 10 characterized by a fourth transistor (Q₁) having a main current conducting electrode that is coupled to said control electrode of said first transistor (Q₄) and having a control electrode that is coupled to said control electrode of said second transistor (Q₅), said fourth transistor (Q₁) attenuating said third signal (V₃) that is developed at said control electrode of said first transistor (Q₄) to prevent simultaneous conduction in both said first (Q₄) and second (Q₅) transistors.

## Patentansprüche

1. Stromversorgungsvorrichtung mit einer Ausgangsstufe, die im Gegentakt arbeitet, mit einer Last (57), die erste (60) und zweite (54) Klemmen hat;
mit einer Quelle für eine Eingangs-Versorgungsspannung (24V), die (über T₁) mit der Last (57) verbunden ist;
mit einem ersten Transistor (Q₄) der Ausgangsstufe, der entsprechende erste und zweite haupt-stromführende Elektroden hat, die einen Hauptstromweg bilden, wobei die erste haupt-stromführende Elektrode des ersten Transistors (über T₁) mit der ersten Klemme (60) der Last (57) verbunden ist;
mit einem zweiten Transistor (Q₅) der Ausgangsstufe, der entsprechende erste und zweite haupt-stromführende Elektroden hat, wobei die erste haupt-stromführende Elektrode des zweiten Transistors (über T₁) mit der zweiten Klemme (54) der Last (57) verbunden ist;
mit einer Quelle (50) von ersten (V₁ ) und zweiten (V₂) Schaltsignalen, die entsprechenden Steuerelektroden des ersten (Q₄) und des zweiten (Q₅) Transistors zugeführt werden, so daß das erste Signal (V₁) in einer gegebenen Periode einen ersten Augenblick bestimmt, wenn der erste Transistor (Q₄) beginnt, sich vom leitenden Zustand in einen nicht-leitenden Zustand zu ändern, und das zweite Signal (V₂) in der gegebenen Periode bestimmt, wenn der zweite Transistor (Q₅) leitend wird, um dadurch den Gegentaktbetrieb des ersten (Q₄) und zweiten (Q₅) Transistors zu bewirken; gekennzeichnet durch
Mittel (Q₁, Q₂), die auf ein drittes Signal ansprechen, das an der Steuerelektrode des von den beiden Transistoren (Q₄, Q₅) leitenden Transistors entwickelt wird, und das ein Maß für die Größe eines Stromes ist, der zwischen den haupt-stromführenden Elektroden des leitenden Transistors fließt, um ein viertes Signal zu erzeugen, das der Steuerelektrode des von den beiden Transistoren (Q₄, Q₅) nicht leitenden Transistors zugeführt wird, um zu verhindern, daß der nicht leitende Transistor in der gegebenen Periode leitend wird, wenn die Größe des in dem leitenden Transistor fließenden Stroms größer ist als ein erster vorgegebener Pegel, und um dadurch das gleichzeitige Leitendwerden des ersten (Q₄) und zweiten (Q₅) Transistors zu vermeiden, wobei das dritte Signal an der Steuerelektrode des leitenden Transistors den vierten signalerzeugenden Mitteln über einen Signalweg zugeführt wird, der nicht den Hauptstromweg des leitenden Transistors einschließt.

2. Vorrichtung nach Anspruch 1 , dadurch gekennzeichnet, daß das erste (V₁ ) und das zweite (V₂) Schaltsignal im wesentlichen gegenphasige Signale sind, so daß alle Übergangszeiten in beiden Signalen gleichzeitig auftreten.

3. Vorrichtung nach Anspruch 1, dadurch gekennzeichnet, daß der erste Transistor ein MOFSET-Leistungstransistor ist.

4. Vorrichtung nach Anspruch 1, dadurch gekennzeichnet, daß während eines Intervalls, das auftritt, wenn der erste Iransistor (Q₄) vom leitfähigen Zustand in den nicht-leitfähigen Zustand übergeht, eine Miller-Kapazität eine der ersten und zweiten haupt-stromführenden Elektroden mit der Steuerelektrode des ersten Transistors (Q₄) verbindet, der eine Verzögerung in einem Übergang des dritten Signals (V₃) an seiner Steuerelektrode bewirkt.

5. Vorrichtung nach Anspruch 1 , dadurch gekennzeichnet, daß die Last (57) über einen Transformator (T₁) angeschlossen ist, und daß eine Ausgangs-Versorgungsspannung (V₆) an einer Sekundärwicklung (T_{1S}) des Transformators (T₁) entwickelt wird.

6. Vorrichtung nach Anspruch 1, dadurch gekennzeichnet, daß die das vierte Signal erzeugenden Mittel ein erstes steuerbares Dämpfungsglied (Q₂, R₁₂) enthalten, das auf das dritte Signal (V₃) anspricht und zwischen einer Klemme (5), die das zweite Schaltsignal (V₂) erzeugt und der Steuerelektrode des zweiten Transistors (Q₅) liegt, um das vierte Signal (V₄), das ein Maß für einen Teil des zweiten Schaltsignals (V₂) ist, der zweiten Elektrode des zweiten Transistors (Q₅) zuzuführen, so daß, solange ein zwischen der Steuerelektrode und der zweiten haupt-stromführenden Elektrode des ersten Transistors (Q₄) entwickeltes Differenzsignal größer ist als ein vorgegebener Wert, der anzeigt, daß ein Strompegel in dem ersten Transistor (Q₄) größer als der vorgegebene Pegel ist, wobei das erste steuerbare Dämpfungsglied (Q₂, R₁₂) den an der Steuerelektrode des zweiten Transistors (Q₅) entwickelten Signalanteil dämpft, um die Leitfähigkeit in dem zweiten Transistor zu verzögern.

7. Vorrichtung nach Anspruch 6, dadurch gekennzeichnet, daß das erste steuerbare Dämpfungsglied einen Spannungsteiler (R₆, R₇, R₈) enthält, der mit der Steuerelektrode des ersten Transistors (Q₄) verbunden ist, und daß ein dritter Transistor (Q₂) vorgesehen ist, der eine haupt-stromführende Elektrode, die mit der Steuerelektrode des zweiten Transistors (Q₅) verbunden ist und eine mit einer Ausgangsklemme des Spannungsteilers verbundene Steuerelektrode aufweist, daß der dritte Transistor (Q₂) eine steuerbare Nebenschlußimpedanz an der Steuerelektrode des zweiten Transistors (Q₅) bildet, die sich gemäß einem Signal ändert, das an der Ausgangsklemme des Spannungsteilers entwickelt wird, und das proportional zu dem an der Steuerelektrode des ersten Transistors (Q₄) entwickelten driten Signals (V₃) ist, um so das Signal zu dämpfen, das an der Steuerelektrode des zweiten Transistors (Q₅) entwickelt wird, solange der erste Transistor leitend ist und daß bei Nicht-Leitendwerden des ersten Transistors die steuerbare Nebenschlußimpedanz (Q₂, R₁₁) sich so ändert, daß der zweite Transistor (Q₅) leitend wird.

8. Vorrichtung nach Anspruch 7, dadurch gekennzeichnet, daß die von dem dritten Transistor (Q₂) gebildete Impedanz einen nennenswert niedrigeren Wert annimmt, solange das dritte Signal (V₃) an der Steuerelektrode des ersten Transistors (Q₄) größer ist als ein vorgegebener Wert.

9. Vorrichtung nach Anspruch 7, dadurch gekennzeichnet, daß der Spannungsteiler aus einem Widerstandsnetzwerk (R₆, R₇, R₈) besteht, und daß das erste steuerbare Dämpfungsglied ferner Rückkopplungsmittel (D₉) enthält, die zwischen dem dritten Transistor (Q₂) und einer zweiten Ausgangsklemme des Widerstandsnetzwerks (R₆, R₇, R₈) liegen, um ein Signal zu erzeugen, das verhindert, daß der dritte Transistor (Q₂) in die Sättigung gelangt, um so den zweiten Transistor (Q₅) leitend zu machen, unmittelbar nachdem der erste Transistor (Q₄) nichtleitend wird.

10. Vorrichtung nach Anspruch 6, dadurch gekennzeichnet, daß das erste steuerbare Dämpfungsglied einen Widerstand (R₁₂) enthält, der zwischen einer Klemme (5), an der das zweite Schaltsignal (V₂) entwickelt wird, und der Steuerelektrode des zweiten Transistors (Q₅) liegt, und daß ein dritter Transistor (Q₂) vorgesehen ist, der eine haupt-stromführende Elektrode hat, die mit einer Verbindung zwischen dem Widerstand (R₁₂) der Steuerelektrode des zweiten Transistors (Q₅) so verbunden ist, daß der Widerstand (R₁₂) und der dritte Transistor (Q₂) einen Teil des zweiten Schaltsignals (V₂) das der Steuerelektrode des zweiten Transistors (Q₅) zugeführt wird, dämpfen, solange der erste Transistor (Q₄) leitend ist, und daß bei Nicht-Leitendwerden des ersten Transistors (Q₄) ein größerer Teil des zweiten Schaltsignals (V₂) der Steuerelektrode des zweiten Transistors (Q₅) zugeführt wird.

11. Vorrichtung nach Anspruch 10, gekennzeichnet durch einen vierten Transistor (Q₁), der eine haupt-stromführende Elektrode hat, die mit der Steuerelektrode des ersten Transistors (Q₄) verbunden ist, und der eine Steuerelektrode hat, die mit der Steuerelektrode des zweiten Transistors (Q₅) verbunden ist, und daß der vierte Transistor (Q₁ ) das dritte Signal (V₃) dämpft, das an der Steuerelektrode des ersten Transistors (Q₄) entwickelt wird, um eine gleichzeitige Leitfähigkeit im ersten (Q₄) und zweiten Transistor (Q₅) zu verhindern.

## Revendications

1. Dispositif d'alimentation de puissance comportant un étage de sortie qui fonctionne selon un mode push-pull comprenant :
- une charge (57) ayant une première (60) et une seconde (54) bornes ;
- une source de tension d'alimentation d'entrée (24V) couplée (par T₁) à ladite charge (57) ;
- un premier transistor (Q₄) dudit étage de sortie ayant des première et seconde électrodes T correspondantes conductrices de courant principal qui forment une trajectoire de courant principal, ladite électrode conductrice de courant principal dudit premier transistor étant couplée (par T₁) à ladite première borne (60) de ladite charge (57) ;
- un second transistor (Q₅) dudit étage de sortie ayant des première et seconde électrodes correspondantes conductrices de courant principal, ladite première électrode conductrice de courant principal du second transistor étant couplée (par T₁) à ladite seconde borne (54) de ladite charge (57) ;
- une source (50) de premier (V₁) et de second (V₂) signaux de commutation, couplée aux électrodes correspondantes de commande dudit premier (Q₄) et second (Q₅) transistors, de manière que ledit premier signal (V₁) détermine dans une période donnée de ce signal,un premier instant durant lequel ledit premier transistor (Q₄) commence à changer de l'état conducteur vers l'état non-conducteur et ledit second signal (V₂) détermine, dans ladite période donnée, lorsque ledit second transistor (Q₅) devient conducteur, afin d'obtenir ledit mode de fonctionnemnet push-pull par lesdits premier (Q₄) et second (Q₅) transistors ;
caractérisé par
des moyens (Q₁, Q₂) agissant en réponse à un troisième signal qui est développé sur l'électrode de commande de celui des premier et second transistors (Q₄, Q₅) qui est conducteur, et qui constituent une indication d'une amplitude d'un courant qui circule entre lesdits électrodes conductrices de courant principal dudit transistor conducteur pour générer un quatrième signal qui est couplé à l'électrode de commande de celui des premier et second transistors (Q₄, Q₅) qui est non-conducteur, pour empêcher ledit transistor non-conducteur de conduire pendant ladite période donnée, alors que l'amplitude dudit courant qui circule dans ledit transistor conducteur est plus grande qu'un premier niveau prédéterminé, ce qui évite ainsi une conduction simultanée desdits premier (Q₄) et second (Q₅) transistors, ledit troisième signal sur ladite électrode de commande du transistor conducteur étant appliqué auxdits moyens générant le quatrième signal, par l'intermédiaire d'une trajectoire de signal qui n'inclue pas la trajectoire de courant principal dudit transistor conducteur.

2. Dispositif selon la revendication 1, caractérisé en ce que lesdits premier (V₁) et second (V₂) signaux de commutation sont essentiellement des signaux anti-phase tels que toutes les périodes de transition se produisent simultanément dans les deux signaux.

3. Dispositif selon la revendication 1 caractérisé en ce que ledit premier transistor (Q₄) comprend un transistor de puissance MOS FET.

4. Dispositif selon la revendication 1 caractérisé en ce que, pendant l'intervalle qui se situe lorsque le premier transistor (Q₄) change de l'état conducteur à l'état non conducteur, une capacité Miller couple l'une desdites première et seconde électrodes conduisant le courant principal, à ladite électrode de commande dudit premier transistor (Q₄), ce qui introduit un retard dans une transition dudit troisième signal (V₃), sur ladite électrode de commande.

5. Dispositif selon la revendication 1, caractérisé en ce que ladite charge (57) est couplée à l'aide d'un transformateur (T₁) et dans lequel une tension d'alimentation de sortie (V₆) est développée sur un enroulement secondaire (T₁₅) dudit transformateur (T₁).

6. Dispositif selon la revendication 1 caractérisé en ce que lesdits moyens générant le quatrième signal comprennent, un premier atténuateur pouvant être commandé (Q₂, R12) agissant en réponse audit troisième signal (V₃) et qui est couplé entre une borne (5) qui développe ledit second signal de commutation (V₂) et ladite électrode de commande dudit second transistor (Q₅) pour coupler ledit quatrième signal (V₄) qui constitue une représentation d'une portion dudit second signal de commutation (V₂) à ladite électrode de commande dudit second transistor (Q₅) de manière telle que, aussi longtemps qu'une différence de signaux développée entre ladite électrode de commande et ladite seconde électrode conductrice de courant principal dudit premier transistor (Q₄), est plus grande qu'une valeur prédéterminée qui est une indication qu'un niveau de courant dans le premier transistor (Q₄) est supérieur audit niveau prédéterminé, ledit premier atténuateur commandable (Q₂ R12) affaiblit ladite portion de signal qui est développée sur ladite électrode de commande du second transistor (Q₅) pour retarder la conduction dans ledit second transistor.

7. Dispositif selon la revendication 6, caractérisé en ce que ledit premier atténuateur commandable comprend un diviseur de tension (R₆, R₇, R₈), couplé à ladite électrode de commande du premier transistor (Q₄), et un troisième transistor (Q₂) ayant une électrode conductrice de courant principal qui est couplée à l'électrode de commande dudit second transistor (Q₅) et ayant une électrode de commande qui est couplée à une borne de sortie dudit diviseur de tension, ledit troisième transistor (Q₂) formant une impédance de shunt commandable sur l'électrode de commande dudit second transistor (Q₅) qui varie selon un signal qui est développé sur ladite borne de sortie du diviseur de tension et qui est proportionnel audit troisième signal (V₃) développé sur l'électrode de commande dudit premier transistor (Q₄) afin d'atténuer ledit signal qui est développé sur l'électrode de commande du second transistor (Q₅) tant que ledit premier transistor est conducteur, et lorsque ledit premier transistor devient non-conducteur, ladite impédance de shunt commandable (Q₂, R11) change de manière que le second transistor (Q₅) devienne conducteur.

8. Dispositif selon la revendication 7 caractérisé en ce que ladite impédance qui est formée par ledit troisième transistor (Q₂) présente une valeur sensiblement inférieure tant que ledit troisième signal (V₃), sur l'électrode de commande dudit premier transistor (Q₄) est plus grand qu'une valeur prédéterminée.

9. Dispositif selon la revendication 7 caractérisé en ce que ledit diviseur de tension comprend un réseau résistif (R₆, R₇, R₈) et dans lequel ledit premier atténuateur commandable comprend en outre des moyens de réaction (D₉), couplés entre ledit troisième transistor (Q₂) et une seconde borne de sortie dudit réseau résistif (R₆, R₇, R₈), pour générer un signal qui empêche ledit troisième transistor (Q₂) d'être saturé, afin de rendre ledit second transistor (Q₅), conducteur immédiatement après que le premier transistor (Q₄) devient non-conducteur.

10. Dispositif selon la revendication 6 caractérisé en ce que ledit premier atténuateur commandable comprend une résistance (R₁₂), couplée entre une borne (5) où est développé ledit second signal de commutation (V₂), et ladite électrode de commande du second transistor (Q₅) et un troisième transistor (Q₂) ayant une électrode conduisant le courant principal qui est couplée à une jonction entre ladite résistance (R₁₂) et ladite électrode de commande du second transistor (Q₅), de manière que ladite résistance (R₁₂) et ledit troisième transistor (Q₂) affaiblissent une portion dudit second signal de commutation (V₂) qui est couplé à ladite électrode de commande du second transistor (Q₅) tant que ledit premier transistor (Q₄) est conducteur, et lorsque ledit premier transistor (Q₄) devient non conducteur, une portion plus importante dudit second signal de commutation (V₂) est couplée à l'électrode de commande du second transistor (Q₅).

11. Dispositif selon la revendication 10 caractérisé par un quatrième transistor (Q₁) ayant une électrode conduisant le courant principal qui est couplée à ladite électrode de commande dudit premier transistor (Q₄) et comportant une électrode de commande qui est couplée à l'électrode de commande du second transistor (Q₅), ledit quatrième transistor (Q₁) affaiblissant ledit troisième signal (V₃) qui est développé sur ladite électrode de commande dudit premier transistor (Q₄) pour empêcher une conduction simultanée à la fois dans le premier (Q₄) et dans le second transistor (Q₅).
